# FASCICULE DE BREVET EUROPEEN

(11) **EP 3 160 802 B1**
(45) Date de publication et mention de la délivrance du brevet: **30.01.2019**
(21) Numéro de dépôt: 15742357.5
(22) Date de dépôt: 29.06.2015
(51) Int. Cl.: B60R 22/18, B60R 22/26

(54) **BANQUETTE DE VEHICULE AUTOMOBILE COMPRENANT UN GUIDE-SANGLE POUR CEINTURE DE SECURITE**
KRAFTFAHRZEUGSITZ MIT EINER GURTFÜHRUNG FÜR EINEN SICHERHEITSGURT
MOTOR VEHICLE SEAT COMPRISING A STRAP GUIDE FOR A SAFETY BELT

(30) Priorité: 30.06.2014 FR 1456197
(43) Date de publication de la demande: 03.05.2017
(73) Titulaire: Renault S.A.S., 92100 Boulogne-Billancourt (FR)
(72) Inventeur: RICHEZ, Emmanuel, 78770 Antouillet (FR); GUICHERD, Olivier, 78450 Villepreux (FR)
(86) Numéro de dépôt international: PCT/FR2015/051768
(87) Numéro de publication internationale: WO 2016/001559

(56) Documents cités:
- DE-A1- 1 430 468
- DE-B3- 10 311 281
- JP-U- S58 121 741
- US-B1- 6 305 713

## Description

### DOMAINE TECHNIQUE AUQUEL SE RAPPORTE L'INVENTION

La présente invention concerne de manière générale la sécurité des passagers dans un véhicule automobile.

Elle concerne plus particulièrement une banquette de véhicule automobile, comprenant une assise et un dossier qui présente un bord inférieur tourné vers l'assise, un bord supérieur opposé, et deux bords latéraux.

Elle concerne aussi un véhicule automobile comportant un châssis, une banquette telle que précitée, et deux ceintures de sécurité centrales comportant chacune une sangle.

### ARRIERE-PLAN TECHNOLOGIQUE

Généralement, un véhicule automobile comporte deux ou trois rangées de sièges.

La seconde rangée de sièges est conçue pour accueillir un nombre variable de passagers, selon le type du véhicule.

On connaît ainsi des banquettes pouvant recevoir jusqu'à trois passagers. Une telle banquette délimite alors un siège central et deux sièges latéraux situés de part et d'autre de ce siège central.

Dans ce genre de banquettes, les ceintures de sécurité des deux sièges latéraux sont du type « à trois points de fixation », en ce sens que la sangle de chaque ceinture de sécurité est fixée à un premier point d'un côté du bassin du passager, passe devant le bassin du passager jusqu'à un second point, puis remonte en travers de la poitrine du passager jusqu'à un troisième point situé au-dessus du premier point. Une telle ceinture de sécurité assure un bon maintien du passager en cas de choc.

En revanche, la ceinture de sécurité du siège central de la banquette est du type « à deux points de fixation », en ce sens que la sangle de la ceinture est fixée à un premier point d'un côté du bassin, et elle passe simplement devant le bassin du passager jusqu'à un second point de fixation. Une telle ceinture de sécurité assure un maintien moins efficace du passager en cas de choc.

DE 103 11 281 B3 divulgue une banquette de véhicule automobile selon le préambule de la revendication 1.

### OBJET DE L'INVENTION

Afin de remédier à l'inconvénient précité de l'état de la technique, la présente invention propose de remplacer les ceintures de sécurité à deux points de fixation par des ceintures de sécurité à trois points de fixation, tout en respectant les normes réglementaires en vigueur.

Plus particulièrement, on propose selon l'invention une banquette telle que définie dans l'introduction, qui comporte un guide-sangle pour sangle de ceinture de sécurité, qui est monté mobile sur le dossier, à distance des bords latéraux de ce dossier, de façon à présenter une hauteur réglable par rapport au bord supérieur du dossier, et qui comporte un corps délimitant deux passages distincts pour deux sangles de ceintures de sécurité et dans lequel les deux passages sont superposés.

Ainsi, grâce à l'invention, ce guide-sangle constitue un troisième point de fixation pour la ou les sangles de ceinture de sécurité affectée(s) au(x) passager(s) assis au centre de la banquette, en ce sens qu'il va permettre de guider chaque sangle depuis un enrouleur de sangle jusqu'au-dessus de l'épaule de ce(s) passager(s).

Le montage mobile en hauteur du guide sangle par rapport au dossier va quant à lui permettre d'adapter la hauteur de ce troisième point de fixation en fonction de la taille du passager. De cette manière, la sangle de la ceinture de sécurité sera correctement ajustée sur le torse du passager si bien qu'en cas de choc, elle ne le blessera pas.

En se plaçant dans le cas où la banquette est susceptible d'accueillir jusqu'à quatre passagers, ce guide sangle sera situé sensiblement à égale distance des bords latéraux du dossier.

D'autres caractéristiques avantageuses et non limitatives de la banquette conforme à l'invention sont les suivantes :
- le dossier comporte une armature intérieure qui est recouverte d'une garniture et qui porte au moins une paire de douilles pour le montage d'un appui-tête, et le guide-sangle comporte une paire de tiges montées mobiles en translation dans ladite paire de douilles ;
- l'armature intérieure du dossier porte deux autres paires de douilles, et il est prévu deux appuis-tête qui comportent chacun une paire de tiges montées mobiles en translation dans lesdites autres paires de douilles ;
- chaque passage présente un contour ouvert qui débouche latéralement sur l'extérieur du corps par une fente d'insertion.

L'invention concerne également un véhicule automobile tel que défini en introduction, dans lequel il est prévu une banquette telle que définie précédemment, qui est montée sur le châssis et dont le guide-sangle permet le passage des sangles des deux ceintures de sécurité centrales.

D'autres caractéristiques avantageuses et non limitatives du véhicule automobile conforme à l'invention sont les suivantes :
- il est prévu davantage de pédoncules pour pênes de ceinture de sécurité que de pênes montés sur les ceintures de sécurité ;
- il est prévu deux ceintures de sécurité extérieures, situées de part et d'autre de la banquette, deux pédoncules extérieurs pour pênes de ceinture de sécurité, qui sont situés de part et d'autre de la banquette, et quatre pédoncules centraux pour pênes de ceinture de sécurité, répartis par paire le long de l'assise, entre les deux pédoncules extérieurs et à distance de ceux-ci ;
- les pédoncules centraux sont au nombre de quatre et sont fixés sur des supports qui sont rattachés au châssis de telle manière que les pédoncules sont rétractables par rapport à l'assise.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique en perspective d'une banquette selon l'invention ;
- la figure 2 est une vue de détail de la zone II de la figure 1 ;
- la figure 3 est une vue schématique de face du guide-sangle de la banquette de la figure 1 ; et
- les figures 4 à 6 sont des vues schématiques de face de la banquette de la figure 1, sur lesquelles sont respectivement représentés deux, trois et quatre passagers assis sur la banquette.

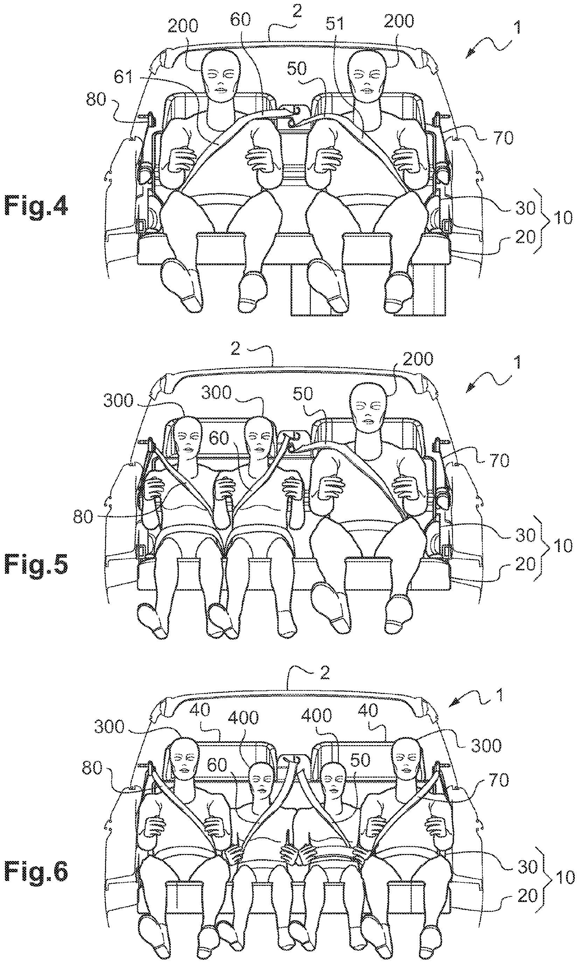

De manière classique, un véhicule automobile 1 comporte un châssis 2 qui comprend notamment un plancher, deux ailes latérales et un toit (voir figures 4 à 6).

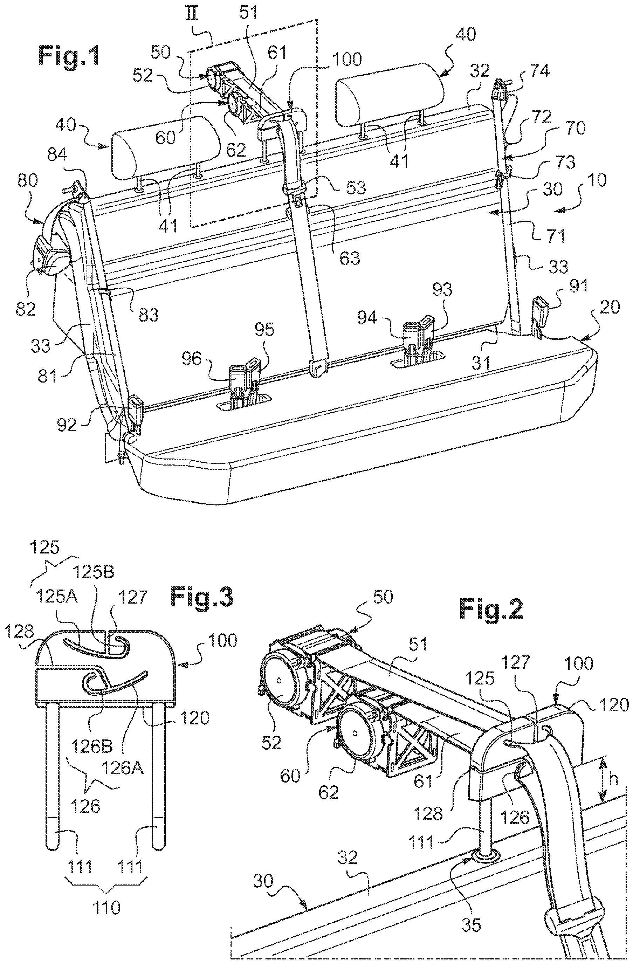

Ce véhicule automobile 1 comporte ici deux sièges avant et une banquette arrière 10 représentée sur la figure 1.

Dans la description, les termes « avant » et « arrière » seront utilisés par rapport à ce véhicule automobile, l'avant d'un composant du véhicule automobile désignant le côté de ce composant qui est tourné vers le capot du véhicule et l'arrière désignant le côté de ce composant qui est tourné vers le coffre.

De la même manière, les termes «inférieur » et «supérieur » seront utilisés par rapport à ce véhicule automobile, la partie inférieure d'un composant désignant la partie de ce composant qui est située du côté du plancher du véhicule et la partie supérieure désignant la partie de ce composant qui est située du côté du toit.

Bien que l'invention ne se limite pas à ce type de véhicule, on considérera ici que le véhicule automobile est du type « tri-corps ». Un tel véhicule automobile comporte un coffre, un habitacle et un capot qui, vus de côté, forment deux décrochés, l'un au niveau du bas du pare-brise et l'autre au niveau du bas de la lunette arrière.

Sur ce type de véhicule automobile, le châssis comporte une tablette métallique qui s'étend entre les deux ailes latérales, à l'arrière de la banquette 10, au niveau de la jonction entre la lunette arrière et le coffre.

Comme le montre la figure 1, la banquette 10 comporte une assise 20 et un dossier 30. Elle est ici prévue pour accueillir jusqu'à quatre passagers.

De manière classique, l'assise 20 et le dossier 30 comportent chacun une armature métallique (non visible sur les figures) recouverte d'une garniture pour le confort des passagers.

L'assise 20 est directement montée sur le plancher du véhicule automobile. Elle y est préférentiellement montée fixement, au moyen de pieds qui, d'un côté, sont soudés à l'armature de l'assise, et qui, de l'autre côté, sont vissés sur le plancher.

En variante, on pourrait prévoir de monter l'assise sur le plancher avec une unique mobilité de basculement vers l'avant, de manière à pouvoir rabattre l'assise contre les dossiers des sièges avant.

Le dossier pourrait quant à lui être fixé sur l'assise ou sur le châssis du véhicule.

Ici, le dossier 30 est plutôt monté mobile sur l'assise 20, au moyen d'une charnière lui permettant de basculer vers l'avant.

Le dossier 30 est ainsi mobile entre une position d'utilisation dans laquelle il s'étend verticalement de manière qu'un passager puisse s'asseoir sur la banquette 10, et une position rabattue dans laquelle il s'étend horizontalement contre l'assise afin de libérer de l'espace de chargement dans le coffre du véhicule automobile.

Préférentiellement, l'assise 20 et le dossier 30 sont monoblocs, en ce sens qu'ils comportent chacun une armature métallique rigide. Le dossier 30 comme l'assise 20 ne sont donc pas fractionnables : ils ne sont pas ici prévus pour pouvoir être rabattus partiellement.

Ce dossier 30 présente un bord inférieur 31 qui, en position d'utilisation, est tourné vers l'assise 20. Il présente également un bord supérieur 32 opposé (tourné vers le toit du véhicule automobile), et deux bords latéraux (respectivement tournés vers les ailes latérales du véhicule automobile).

Comme le montre la figure 1, la banquette 10 comporte exactement deux appuis-tête 40 qui sont fixés au bord supérieur 32 du dossier 30.

Comme le montre la figure 6, chaque appui-tête 40 présente une largeur telle que, lorsque la banquette 10 accueille quatre passagers 300, 400, il s'étend à l'arrière des têtes de deux des passagers 300, 400.

Classiquement, ces appuis-tête 40 comportent chacun une armature métallique recouverte d'une garniture, ainsi que deux tiges parallèles 41 qui sont soudées à l'armature de l'appui-tête 40 et qui sont montées coulissantes dans deux douilles fixées à l'ossature métallique du dossier 30 (voir figure 1). De cette manière, les deux appuis-tête 40 sont mobiles par rapport au dossier 30, entre une position haute et une position basse (en appui contre le dossier 30).

Chacune des deux douilles précitées, bien connues de l'homme du métier, comporte un fourreau qui est soudé à l'ossature métallique du dossier 30 et qui loge intérieurement une gaine en matière plastique. Cette gaine porte à son extrémité supérieure une collerette qui émerge à l'extérieur du dossier afin de délimiter un passage pour l'un des tiges parallèles 41 de l'appui-tête 40. La gaine permet quant à elle de guider le coulissement de cette tige parallèle 41. Cette gaine comporte par ailleurs des languettes d'encliquetage qui sont adaptées à coopérer avec des crans prévus sur les tiges parallèles 41 pour bloquer en hauteur l'appui-tête 40.

Comme le montre la figure 1, le véhicule automobile est par ailleurs équipé de quatre ceintures de sécurité 50, 60, 70, 80 pour les quatre passagers.

Chaque ceinture de sécurité 50, 60, 70, 80 est ici du type à trois points de fixation. Chaque ceinture comporte alors un enrouleur 52, 62, 72, 82 fixé à une partie structurelle du véhicule automobile, une sangle 51, 61, 71, 81 dont une partie est enroulée dans l'enrouleur et dont une autre partie émerge de l'enrouleur, et un pêne 53, 63, 73, 83.

Les enrouleurs 72, 82 des deux ceintures de sécurité 70, 80 extérieures (celles situées de part et d'autre de la banquette 10) sont directement fixés aux ailes latérales du véhicule automobile, ici par vissage.

La sangle 71, 81 de chacune de ces deux ceintures de sécurité 70, 80 extérieures émerge de l'enrouleur 72, 82, passe par un guide 74, 84 qui est fixé à l'une des ailes latérales du véhicule automobile (à hauteur du bord supérieur du dossier 30), puis redescend jusqu'au plancher où son extrémité libre est fixée.

Comme le montrent les figures 1 et 2, les enrouleurs 52, 62 des deux ceintures de sécurité 50, 60 centrales (celles situées entre les appuis-tête 40 de la banquette 10) sont fixés à la tablette arrière (non représentée) du châssis, par exemple par vissage.

La sangle 51, 61 de chacune de ces deux ceintures de sécurité 50, 60 centrales émerge de l'enrouleur, passe par un guide-sangle 100 situé entre les deux appuis-tête 40, puis redescend vers le plancher où son extrémité libre est fixée. Chaque sangle 51, 61 passe soit au travers d'un passage prévu dans l'assise 20, soit entre l'assise 20 et le dossier 30.

La présente invention porte alors plus précisément sur le guide-sangle 100.

Selon l'invention, ce guide-sangle 100 est monté mobile sur le dossier 30, à distance des bords latéraux 33 du dossier 30, de façon à présenter une hauteur h réglable par rapport au bord supérieur 32 du dossier 30 (voir figure 2).

Pour cela, comme le montre la figure 3, le guide-sangle 100 comporte des moyens de montage 110 sur le dossier 30, et un corps 120.

En l'espèce, le guide-sangle 100 est situé à égales distances des bords latéraux du dossier 30. Selon l'invention il délimite deux passages 125, 126 distincts pour les deux sangles 51, 61 des ceintures de sécurité 50, 60 centrales.

Ici, le corps 120 se présente sous la forme d'une plaque rectangulaire, et les moyens de montage 110 se présentent sous la forme de deux tiges 111 qui s'étendent à partir du bord inférieur du corps 120, perpendiculairement à celui-ci.

Le corps 120 et les deux tiges 111 sont soit formés d'une seule pièce, par emboutissage d'une plaque métallique, soit assemblés pour former une seule pièce monobloc. On pourra prévoir de recouvrir le corps 120 d'une peau en matériau plastique, par exemple en surmoulant la plaque métallique.

Les deux tiges 111 sont ici identiques à celles équipant les appuis-tête 40. Elles sont alors montées coulissantes dans des gaines en matière plastique logées dans deux douilles soudées à l'ossature métallique du dossier 30. Ces douilles et ces gaines sont ici encore identiques à celles accueillant les tiges 41 des appuis-tête 40.

En pratique, le guide-sangle 100 peut ainsi se monter en lieu et place d'un appui-tête central d'une banquette initialement prévue pour accueillir trois passagers uniquement.

De cette manière, le corps 120 est mobile par rapport au dossier 30, entre une position haute et une position basse (en appui contre le dossier 30).

Les languettes d'encliquetage prévues sur les gaines en matière pastique (logées dans les douilles) sont alors prévues pour coopérer avec des encoches prévues sur les tiges 111 du guide-sangle 100, ce qui permet aux passagers de régler manuellement la hauteur h de ce guide-sangle 100 par rapport au bord supérieur 32 du dossier 30.

Comme le montre la figure 3, les deux passages 125, 126 délimitées par le corps 120 sont superposées en hauteur (l'un au-dessus de l'autre).

Ici, chacun de ces deux passages 125, 126 se présente sous la forme d'une fente, dont une première partie 125A, 126A est légèrement incurvée, et dont une seconde partie 125B, 126B est courbée en demi-cercle.

Ces deux passages 125, 126 sont positionnés tête-bêche l'un au-dessus de l'autre, si bien que les premières parties 125A, 126A de ces passages 125, 126 sont inclinées l'une par rapport à l'autre, en V.

Chaque passage 125, 126 présente ici un contour ouvert. Plus précisément, chaque passage 125, 126 communique avec l'extérieur du guide-sangle 100, via une fente d'engagement 127, 128 qui s'étend depuis le bord du corps 120 jusqu'au passage 125, 126 correspondant.

Cette fente d'engagement 127, 128 permet d'insérer ou d'extraire facilement une sangle de ceinture de sécurité dans le passage 125, 126 correspondant.

Comme le montre la figure 1, les pênes 53, 63, 73, 83 des ceintures de sécurité 50, 60, 70, 80 sont conçus pour être engagés et bloqués dans des moyens d'ancrage 91, 92, 93, 94, 95, 96 prévus au niveau de l'assise 20 de la banquette 10.

En l'espèce, chaque pêne comporte, d'une part, un corps qui présente une fente enfilée sur la sangle, et, d'autre part, une plaquette qui s'étend à partir du corps et qui est prévue pour se verrouiller dans un pédoncule.

Classiquement, chaque moyen d'ancrage est formé par un pédoncule monté sur un support.

Selon une caractéristique préférentielle de l'invention, il est prévu davantage de pédoncules 91, 92, 93, 94, 95, 96 que de pênes montés sur les ceintures de sécurité 50, 60, 70, 80.

En l'espèce, le véhicule automobile comporte, pour la banquette 10, six pédoncules 91, 92, 93, 94, 95, 96 et seulement quatre ceintures de sécurité 50, 60, 70, 80 chacune équipée d'un seul pêne.

Il est plus précisément prévu deux pédoncules 91, 92 extérieurs, qui sont situés de part et d'autre de la banquette 10 et dont les supports sont formés par des tiges fixées au plancher du véhicule automobile.

Il est par ailleurs prévu quatre pédoncules 93, 94, 95, 96 centraux, qui sont répartis par paire le long de l'assise 20, entre les deux pédoncules 91, 92 extérieurs, à distance de ceux-ci.

Les deux pédoncules de chaque paire de pédoncules 93, 94, 95, 96 sont ici fixés sur un même support.

Les deux supports sont ici prévus de telle sorte que les quatre pédoncules sont rétractables par rapport à l'assise 20. De cette manière, lorsqu'ils ne sont pas utilisés, ces pédoncules peuvent être placés de telle manière qu'un passager peut s'asseoir par-dessus sans être gêné.

Ici, ces supports sont à cet effet formés par des sangles (non visibles) reliées au plancher du véhicule automobile. Les quatre pédoncules sont quant à eux prévus pour se rétracter soit dans des cavités creusées dans l'assise 20 (voir figure 1), soit à la jonction entre l'assise 20 et le dossier 30.

Comme le montre la figure 4, lorsque deux passagers 200 de fortes corpulences souhaitent s'asseoir sur la banquette 10, ils peuvent ainsi rétracter les quatre pédoncules centraux, et utiliser les seules ceintures de sécurité 50, 60 centrales, en engageant leurs pênes dans les pédoncules 91, 92 extérieurs.

Pour ne pas être gênés par les ceintures de sécurité 70, 80 latérales (qui ne sont pas utilisées), les deux passagers 200 peuvent (avant de s'asseoir) basculer le dossier 30 vers l'avant de manière à passer les sangles 71, 81 de ces deux ceintures de sécurité 70, 80 à l'arrière du dossier 30, avant de ramener le dossier en position d'utilisation. Des crochets prévus à cet effet à l'arrière du dossier 30 peuvent faciliter le maintien des sangles 71, 81 à l'arrière de la banquette 10.

Pour ne pas être blessés par les sangles 51, 61 des ceintures de sécurité 50, 60 centrales en cas de choc, les deux passagers 200 peuvent également ajuster la hauteur du guide-sangle 100, en le déplaçant ici en position haute.

Comme le montre la figure 6, lorsque quatre passagers 300, 400 de moindres corpulences souhaitent s'asseoir sur la banquette 10, ils utilisent alors les quatre ceintures de sécurité 50, 60, 70, 80 en engageant leurs pênes dans les pédoncules 93, 94, 95, 96 centraux.

Pour ne pas être blessés par les sangles 51, 61 des ceintures de sécurité 50, 60 centrales en cas de choc, les deux passagers 400 assis au centre de la banquette 10 peuvent ajuster la hauteur du guide-sangle 100, en le déplaçant ici en position basse.

Comme le montre la figure 5, lorsque trois passagers 200, 300 de corpulences variables souhaitent s'asseoir sur la banquette 10, celle de plus forte corpulence s'installe de la manière représentée sur la figure 4, tandis que les deux autres s'installent de la manière représentée sur la figure 6.

Pour ne pas être blessés par les sangles 51, 61 des ceintures de sécurité 50, 60 centrales en cas de choc, le passager 200 de plus forte corpulence utilise la ceinture de sécurité 50 qui émerge du passage 125 le plus haut du guide-sangle 100, tandis que l'autre passager utilise la ceinture de sécurité 60 qui émerge du passage 126 le plus bas du guide-sangle 100. L'intérêt d'avoir deux passages 125, 126 superposés est ainsi de permettre à chaque passager d'utiliser une ceinture de sécurité dont la sangle est correctement positionnée en hauteur par rapport à son épaule.

## Revendications

1. Banquette (10) de véhicule automobile, comprenant une assise (20) et un dossier (30) qui présente un bord inférieur (31) tourné vers l'assise (20), un bord supérieur (32) opposé, et deux bords latéraux (33),
**caractérisée en ce qu'**elle comprend un guide-sangle (100) pour sangle de ceinture de sécurité, qui est monté mobile sur le dossier (30), à distance des bords latéraux (33), de façon à présenter une hauteur (h) réglable par rapport au bord supérieur (32) du dossier (30), et qui comporte un corps (120) délimitant deux passages (125, 126) distincts pour deux sangles (51, 61) de ceintures de sécurité (50, 60) et dans lequel les deux passages (125, 126) sont superposés.

2. Banquette (10) selon la revendication précédente, dans laquelle le guide-sangle (100) est situé à égale distance des deux bords latéraux (33) du dossier (30).

3. Banquette (10) selon l'une des revendications précédentes, dans laquelle le dossier (30) comporte une armature intérieure qui est recouverte d'une garniture et qui porte au moins une paire de douilles (35) de montage d'un appui-tête (40), et dans laquelle le guide-sangle (100) comporte une paire de tiges (111) montées mobiles en translation dans ladite paire de douilles (35).

4. Banquette (10) selon la revendication précédente, dans laquelle l'armature intérieure du dossier (30) porte deux autres paires de douilles, et dans laquelle il est prévu deux appuis-tête (40) qui comportent chacun une paire de tiges (41) montées mobiles en translation dans lesdites autres paires de douilles.

5. Banquette (10) selon l'une des revendications précédentes, dans laquelle chaque passage (125, 126) présente un contour ouvert qui débouche latéralement sur l'extérieur du corps (120) par une fente d'insertion (127, 128).

6. Véhicule automobile (1) comportant un châssis (2), et deux ceintures de sécurité (50, 60) centrales comportant chacune une sangle (51, 61), **caractérisé en ce qu'**il comporte une banquette (10) selon l'une des revendications précédentes, qui est montée sur le châssis et dont le guide-sangle (100) permet le passage des sangles (51, 61) des deux ceintures de sécurité (50, 60) centrales.

7. Véhicule automobile (1) selon la revendication précédente, dans lequel il est prévu davantage de pédoncules (91, 92, 93, 94, 95, 96) pour pênes de ceinture de sécurité que de pênes montés sur les ceintures de sécurité (50, 60, 70, 80).

8. Véhicule automobile (1) selon la revendication précédente, dans lequel il est prévu :
- deux ceintures de sécurité (70, 80) extérieures, situées de part et d'autre de la banquette (10),
- deux pédoncules (91, 92) extérieurs pour pênes de ceinture de sécurité, qui sont situés de part et d'autre de la banquette (10), et
- quatre pédoncules (93, 94, 95, 96) centraux pour pênes de ceinture de sécurité, répartis par paire le long de l'assise (20), entre les deux pédoncules (91, 92) extérieurs et à distance de ceux-ci.

## Patentansprüche

1. Sitzbank (10) eines Kraftfahrzeugs, die eine Sitzfläche (20) und eine Rückenlehne (30) enthält, welche einen zur Sitzfläche (20) weisenden unteren Rand (31), einen gegenüberliegenden oberen Rand (32) und zwei Seitenränder (33) aufweist,
**dadurch gekennzeichnet, dass** sie eine Gurtführung (100) für ein Gurtband eines Sicherheitsgurts enthält, die in Abstand zu den Seitenrändern (33) beweglich auf die Rückenlehne (30) montiert ist, um eine Höhe (h) aufzuweisen, die bezüglich des oberen Rands (32) der Rückenlehne (30) einstellbar ist, und die einen Körper (120) aufweist, der zwei unterschiedliche Durchgänge (125, 126) für zwei Gurtbänder (51, 61) von Sicherheitsgurten (50, 60) begrenzt und in dem die zwei Durchgänge (125, 126) übereinander angeordnet sind.

2. Sitzbank (10) nach dem vorhergehenden Anspruch, wobei die Gurtführung (100) sich in gleichem Abstand zu den zwei Seitenrändern (33) der Rückenlehne (30) befindet.

3. Sitzbank (10) nach einem der vorhergehenden Ansprüche, wobei die Rückenlehne (30) einen inneren Rahmen aufweist, der mit einem Beschlag bedeckt ist, der mindestens ein Paar von Montagebuchsen (35) einer Kopfstütze (40) trägt, und wobei die Gurtführung (100) ein Paar von Stangen (111) aufweist, die translationsbeweglich in das Paar von Buchsen (35) montiert sind.

4. Sitzbank (10) nach dem vorhergehenden Anspruch, wobei der innere Rahmen der Rückenlehne (30) zwei weitere Buchsenpaare aufweist, und wobei zwei Kopfstützen (40) vorgesehen sind, die je ein Paar von Stangen (41) aufweisen, die translationsbeweglich in die zwei anderen Buchsenpaare montiert sind.

5. Sitzbank (10) nach einem der vorhergehenden Ansprüche, wobei jeder Durchgang (125, 126) einen offenen Umriss aufweist, der durch einen Einführschlitz (127, 128) seitlich an der Außenseite des Körpers (120) mündet.

6. Kraftfahrzeug (1), das einen Aufbau (2) und zwei zentrale Sicherheitsgurte (50, 60) aufweist, die je ein Gurtband (51, 61) aufweisen, **dadurch gekennzeichnet, dass** es eine Sitzbank (10) nach einem der vorhergehenden Ansprüche aufweist, die auf den Aufbau montiert ist und deren Gurtführung (100) den Durchgang der Gurtbänder (51, 61) der zwei zentralen Sicherheitsgurte (50, 60) erlaubt.

7. Kraftfahrzeug (1) nach dem vorhergehenden Anspruch, in dem mehr Gurtschlösser (91, 92, 93, 94, 95, 96) für Sicherheitsgurtriegel als auf die Sicherheitsgurte (50, 60, 70, 80) montierte Riegel vorgesehen sind.

8. Kraftfahrzeug (1) nach dem vorhergehenden Anspruch, in dem vorgesehen sind:
- zwei äußere Sicherheitsgurte (70, 80), die sich zu beiden Seiten der Sitzbank (10) befinden,
- zwei äußere Gurtschlösser (91, 92) für Sicherheitsgurtriegel, die sich zu beiden Seiten der Sitzbank (10) befinden, und
- vier zentrale Gurtschlösser (93, 94, 95, 96) für Sicherheitsgurtriegel, die paarweise entlang der Sitzfläche (20) zwischen den zwei äußeren Gurtschlössern (91, 92) und in Abstand zu diesen verteilt sind.

## Claims

1. Motor vehicle bench seat (10) comprising a seat part (20) and a backrest (30) which has a lower edge (31) facing the seat part (20), an opposite upper edge (32), and two lateral edges (33),
**characterized in that** it comprises a webbing guide (100) for seat belt webbing, which is mounted in a movable manner on the backrest (30), at a distance from the lateral edges (33), so as to have a height (h) that is adjustable with respect to the upper edge (32) of the backrest (30), and which comprises a body (120) that delimits two distinct passages (125, 126) for two webbings (51, 61) of seat belts (50, 60) and wherein the two passages (125, 126) are superposed.

2. Bench seat (10) according to the preceding claim, wherein the webbing guide (100) is situated at an equal distance from the two lateral edges (33) of the backrest (30) .

3. Bench seat (10) according to either of the preceding claims, wherein the backrest (30) comprises an inner frame which is covered with trim and which bears at least one pair of bushings (35) for mounting a headrest (40), and wherein the webbing guide (100) comprises a pair of stems (111) mounted so as to be able to move in translation in said pair of bushings (35).

4. Bench seat (10) according to the preceding claim, wherein the inner frame of the backrest (30) bears two other pairs of bushings, and wherein two headrests (40) are provided, which each comprise a pair of stems (41) mounted so as to be able to move in translation in said other pairs of bushings.

5. Bench seat (10) according to one of the preceding claims, wherein each passage (125, 126) has an open contour which opens laterally onto the outside of the body (120) through an insertion slot (127, 128).

6. Motor vehicle (1) comprising a chassis (2) and two central seat belts (50, 60) that each comprise webbing (51, 61), **characterized in that** it comprises a bench seat (10) according to one of the preceding claims, which is mounted on the chassis and the webbing guide (100) of which allows the passage of the webbings (51, 61) of the two central seat belts (50, 60).

7. Motor vehicle (1) according to the preceding claim, wherein more buckles (91, 92, 93, 94, 95, 96) for seat belt tongues are provided than tongues mounted on the seat belts (50, 60, 70, 80).

8. Motor vehicle (1) according to the preceding claim, wherein the following are provided:
- two outer seat belts (70, 80) that are situated on either side of the bench seat (10),
- two outer buckles (91, 92) for seat belt tongues, which are situated on either side of the bench seat (10), and
- four central buckles (93, 94, 95, 96) for seat belt tongues, which are distributed in pairs along the seat part (20), between the two outer buckles (91, 92) and at a distance therefrom.
